# DEMANDE DE BREVET EUROPEEN

(11) **EP 3 846 503 A1**
(43) Date de publication de la demande: **07.07.2021**
(21) Numéro de dépôt: 20216641.9
(22) Date de dépôt: 22.12.2020
(51) Int. Cl.: H04W 4/02, H04L 29/08, H04W 4/33, H04W 4/38, H04W 4/70, H04L 12/28

(54) **PROCÉDÉ ET SYSTÈME D'ÉMISSION PRÉDICTIVE ET AUTOMATIQUE D'UN SIGNAL DOMOTIQUE**

(30) Priorité: 31.12.2019 FR 1915762
(71) Demandeur: Cabasse Group, 34000 Montpellier (FR)
(72) Inventeur: MOLINIE, Alain, 34000 Montpellier (FR); LAVIGNE, Eric, 34000 Montpellier (FR)
(74) Mandataire: Cornuejols, Georges

(57) **Abrégé**

Le procédé (100) d'émission prédictive et automatique d'un signal domotique, comporte :
- une étape (155) de saisie d'un identifiant représentatif d'une nature topologique d'un dispositif électronique communicant (205),
- une étape (105) d'enregistrement, dans une mémoire informatique (210), de la donnée représentative d'une nature topologique saisie, dite « donnée topologique » d'au moins un dispositif électronique communicant,
- une étape (110) d'émission, par au moins un dispositif électronique communicant, d'une donnée représentative d'une valeur de paramètre physique,
- une étape (115) de collecte d'au moins une dite donnée dans une mémoire informatique,
- une étape (120) de génération, par un serveur de modélisation (225) et par apprentissage automatique, d'un processus de prédiction associant au moins une valeur collectée et au moins une donnée topologique, dites « données descriptrices », à au moins une autre valeur collectée, dite « résultat »,
- une étape (125) d'exécution, par un serveur de supervision (230), du processus de prédiction de résultats appliqué à au moins une donnée émise par au moins un dispositif électronique communicant associé à une donnée topologique en mémoire,
- une étape (130) de traitement du résultat prédit.

## Description

### DOMAINE TECHNIQUE DE L'INVENTION

La présente invention vise un procédé et un système d'émission prédictive et automatique d'un signal domotique. Elle s'applique, notamment, au domaine du contrôle, de la gestion et de la commande d'habitats pour particuliers.

### ÉTAT DE LA TECHNIQUE

Les acteurs économiques du marché de la maison connectée (domotique) déploient des milliers d'appareils, de différents types (capteurs ou actionneurs par exemple). Chaque appareil dans chaque foyer peut remonter dans un nuage informatique de nombreuses données qui sont aujourd'hui inexploitées et inexploitables en tant que telles par les consommateurs. Toutefois, l'utilisation statistique de ces données pourrait apporter des services innovants aux consommateurs, permettant notamment d'améliorer la sécurité et le confort du domicile et de ses occupants.

La littérature scientifique sur l'analyse des données issues de capteurs d'une maison vise essentiellement à modéliser le comportement humain pour deux finalités, la performance énergétique et la santé humaine et en particulier pour le support à l'autonomie des personnes âgées.

En ce qui concerne la performance énergétique, les études cherchent à déterminer la durée et les caractéristiques des activités d'éclairage, d'ouverture des portes, des fenêtres et/ou des volets, de l'ajustement des thermostats. L'objectif est bien sûr de prédire des consommations, mais aussi de recommander des comportements vertueux, ou de signaler des anomalies (vitres ouvertes, fer à repasser encore en fonctionnement, etc...).

En ce qui concerne la santé humaine, la littérature vise à caractériser les activités de la vie quotidienne. L'objectif de cette modélisation est soit de recommander la pratique d'exercices liés à un régime, soit de prédire des maladies comme les dépressions (moins de sorties du domicile, moins de paroles, désordre du sommeil, moins de repas), ou les diabètes (augmentation de la fréquence des collations, des somnolences, ...), soit de détecter des situations de danger, typiquement la chute d'un résident.

On connaît, notamment, des systèmes tels que décrits dans les demandes de brevet américain US 2015/061 859 et US 2018/306 609.

Aucun de ces documents ne permet toutefois de détecter rapidement des comportements normaux ou anormaux pour un dispositif à partir d'une empreinte caractéristique de ce type de dispositif.

La demande de brevet américain US 2015/061 permet seulement d'ajouter le nom d'une pièce dans laquelle est positionnée un capteur de pression sans que ce paramètre ait d'influence sur le résultat des calculs réalisés ultérieurement.

La demande de brevet américain US 2018/306 609 décrit différents capteurs pouvant être présents dans un domicile pour permettre de détecter des comportements d'utilisateurs. Cependant, ces capteurs demeurent indépendants dans leur catégorisation.

Ainsi, l'inconvénient des systèmes actuels tient à la faible précision des modèles créés, en l'absence notamment de la connaissance de la disposition des appareils au sein de l'habitat.

### PRESENTATION DE L'INVENTION

La présente invention vise à remédier à tout ou partie de ces inconvénients.

À cet effet, selon un premier aspect, la présente invention vise un procédé d'émission prédictive et automatique d'un signal domotique, qui comporte :
- une étape de saisie d'un identifiant représentatif d'une nature topologique d'un dispositif électronique communicant,
- une étape d'enregistrement, dans une mémoire informatique, de la donnée représentative d'une nature topologique saisie, dite « donnée topologique » d'au moins un dispositif électronique communicant,
- une étape d'émission, par au moins un dispositif électronique communicant, d'une donnée représentative d'une valeur de paramètre physique,
- une étape de collecte d'au moins une dite donnée dans une mémoire informatique,
- une étape de génération, par un serveur de modélisation et par apprentissage automatique, d'un processus de prédiction associant au moins une valeur collectée et au moins une donnée topologique, dites « données descriptrices », à au moins une autre valeur collectée, dite « résultat »,
- une étape d'exécution, par un serveur de supervision, du processus de prédiction de résultats appliqué à au moins une donnée émise par au moins un dispositif électronique communicant associé à une donnée topologique en mémoire,
- une étape de traitement du résultat prédit.

Grâce à ces dispositions, la combinaison des données représentatives de paramètres physiques et topologiques permet la conception de modèles plus performants, c'est-à-dire représentatifs du résultat réel avec un indice de confiance plus élevé. La donnée topologique peut, ici, représenter à la fois le positionnement logique d'un dispositif électronique communicant dans un réseau informatique (par exemple, un relais entre une machine à laver connectée et une set-top box) ou le positionnement physique dudit dispositif (par exemple, dans une chambre ou dans un salon).

Dans des modes de réalisation, l'étape de génération met en œuvre au moins une séquence de valeurs collectées associées à au moins un résultat.

Ces modes de réalisation permettent de prédire un état en fonction d'une succession de valeurs émises par un capteur. De tels modes de réalisation permettent la réalisation de modèles temporels complexes, liant l'évolution d'un prédicteur à un résultat.

Dans des modes de réalisation, l'étape de traitement comporte une étape d'émission d'un signal d'alerte.

Ces modes de réalisation permettent de notifier un utilisateur d'un risque sur l'habitat ou sur un risque le concernant, voire de notifier un tiers d'un risque concernant un habitant de l'habitat. Par exemple, l'absence d'activité d'une personne âgée.

Dans des modes de réalisation, l'étape de traitement comporte une étape d'actionnement d'au moins un dispositif électronique communiquant en fonction du résultat prédit.

Ces modes de réalisation permettent, par exemple, d'actionner l'allumage d'ampoules connectées lors de l'absence des habitants, de sorte à simuler une présence et à limiter les risques de cambriolage. Ces modes de réalisation permettent également d'anticiper l'arrivée d'un habitant, en allumant le chauffage par exemple.

Dans des modes de réalisation, le procédé objet de la présente invention comporte une étape de génération, par un serveur de modélisation et par apprentissage automatique, d'au moins une règle d'actionnement d'au moins un dispositif électronique communicant en fonction d'au moins une valeur descriptive.

Ces modes de réalisation permettent de générer des modèles de règles de mise en œuvre de dispositifs électroniques communicants évolutifs au gré des usages d'un utilisateur de chaque dit dispositif électronique communicant.

Dans des modes de réalisation, l'étape d'exécution est réalisée par un dispositif électronique communicant embarquant un programme informatique représentatif du processus généré.

Ces modes de réalisation permettent de désencombrer le réseau informatique en exécutant le processus au plus proche du besoin d'exécution au lieu d'envoyer des requêtes sur le réseau.

Dans des modes de réalisation, le procédé objet de la présente invention comporte une étape de mesure d'une distance radio ou logique entre un dispositif électronique communicant et un périphérique communicant, la donnée de nature topologique mémorisée correspondant à cette distance mesurée.

Ces modes de réalisation permettent de réaliser une cartographie dynamique du positionnement des dispositifs les uns en rapport avec les autres.

Dans des modes de réalisation, le procédé objet de la présente invention comporte une étape de saisie d'un identifiant représentatif d'une nature topologique d'un dispositif électronique communicant, la donnée de nature topologique mémorisée correspondant à cet identifiant saisi.

Ces modes de réalisation, déclaratifs, permettent de fournir une information certaine du positionnement dans un réseau ou réel d'un dispositif électronique communicant.

Selon un deuxième aspect, la présente invention vise un système d'émission prédictive et automatique d'un signal domotique, qui comporte :
- au moins un dispositif électronique communicant,
- un moyen de saisie d'un identifiant représentatif d'une nature topologique d'un dispositif électronique communicant,
- une première mémoire informatique configurée pour enregistrer la donnée représentative d'une nature topologique saisie, dite « donnée topologique » d'au moins un dispositif électronique communicant,
- un moyen d'émission, par au moins un dispositif électronique communicant, d'une donnée représentative d'une valeur de paramètre physique,
- un moyen de collecte d'au moins une dite donnée dans une deuxième mémoire informatique,
- un serveur de modélisation, par apprentissage automatique, d'un processus de prédiction associant au moins une valeur collectée et au moins une donnée topologique, dites « données descriptrices », à au moins une autre valeur collectée, dite « résultat »,
- un serveur de supervision exécutant le processus de prédiction de résultats appliqué à au moins une donnée émise par au moins un dispositif électronique communicant associé à une donnée topologique en mémoire,
- un moyen de traitement du résultat prédit.

Les avantages, buts et caractéristiques particulières de ce deuxième aspect correspondent aux avantages, buts et caractéristiques particulières du procédé objet de la présente invention.

### BREVE DESCRIPTION DES FIGURES

D'autres avantages, buts et caractéristiques particulières de l'invention ressortiront de la description non limitative qui suit d'au moins un mode de réalisation particulier du procédé et du système objets de la présente invention, en regard des dessins annexés, dans lesquels :
- La figure 1 représente, schématiquement, un mode de réalisation particulier du procédé objet de la présente invention et
- La figure 2 représente, schématiquement, un mode de réalisation particulier du système objet de la présente invention.

### DESCRIPTION DETAILLEE

La présente description est donnée à titre non limitatif, chaque caractéristique d'un mode de réalisation pouvant être combinée à toute autre caractéristique de tout autre mode de réalisation de manière avantageuse.

On note dès à présent que les figures ne sont pas à l'échelle.

Par « nature topologique », on entend à la fois le positionnement dans un réseau informatique et le positionnement géographique absolu ou relatif d'un objet. Par positionnement géographique « absolu », on entend le positionnement dans un référentiel terrestre, tel par exemple les coordonnées GPS (pour « Global Positioning System », traduit par Système de Positionnement Mondial, modèle déposé). Par positionnement géographique « relatif », on entend le positionnement de l'objet vis-à-vis d'autres objets ou le positionnement dans un espace conceptuel de l'habitat, représentant par exemple le positionnement dans une chambre ou dans un salon ou dans une pièce d'eau.

Par « dispositif électronique communicant », on entend par exemple un capteur, un émetteur ou un actionneur.

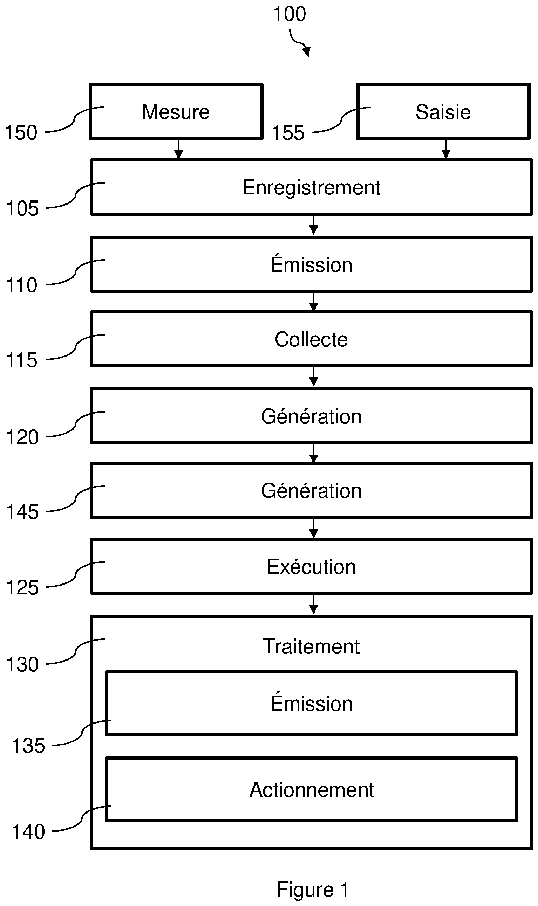

On observe, sur la figure 1, qui n'est pas à l'échelle, une vue schématique d'un mode de réalisation du procédé 100 objet de la présente invention. Ce procédé 100 d'émission prédictive et automatique d'un signal domotique, comporte :
- une étape 155 de saisie d'un identifiant représentatif d'une nature topologique d'un dispositif électronique communicant,
- une étape 105 d'enregistrement, dans une mémoire informatique, de la donnée représentative d'une nature topologique saisie, dite « donnée topologique » d'au moins un dispositif électronique communicant,
- une étape 110 d'émission, par au moins un dispositif électronique communicant, d'une donnée représentative d'une valeur de paramètre physique,
- une étape 115 de collecte d'au moins une dite donnée dans une mémoire informatique,
- une étape 120 de génération, par un serveur de modélisation et par apprentissage automatique, d'un processus de prédiction associant au moins une valeur collectée et au moins une donnée topologique, dites « données descriptrices », à au moins une autre valeur collectée, dite « résultat »,
- une étape 125 d'exécution, par un serveur de supervision, du processus de prédiction de résultats appliqué à au moins une donnée émise par au moins un dispositif électronique communicant associé à une donnée topologique en mémoire,
- une étape 130 de traitement du résultat prédit.

L'étape 105 d'enregistrement peut être réalisée de manière manuelle, automatique et semi-automatique.

Par « manuelle », on entend ici la réalisation d'une étape de saisie 155 par un opérateur. Une telle opération de saisie met en œuvre, par exemple, une interface de saisie permettant à l'opérateur de sélectionner au sein d'une liste ou d'entrer de manière libre une information représentative d'une nature topologique d'un dispositif électronique communicant.

Une telle interface de saisie peut être logicielle, de type interface utilisateur graphique (traduit de « Graphic User Interface », abrégé GUI) exécutée par un circuit électronique de calcul associé à un périphérique d'affichage.

Une telle interface peut être adressée par la mise en œuvre d'un périphérique de type clavier, clavier virtuel, souris, écran tactile ou tout autre périphérique de saisie.

Une telle interface de saisie peut être logicielle, de type interface de programmation d'application (traduit de « application programming interface », abrégé API).

Une telle interface peut être adressée par la mise en œuvre d'un circuit électronique de calcul associé à l'API par un réseau de données.

Ici, l'opérateur peut non seulement saisir une information telle que « chambre », « salon », voire des coordonnées GPS, mais également indiquer en relation de quel autre objet le dispositif est situé. Par exemple, une prise connectée peut être associée à une machine à laver.

En cas de mise en œuvre de l'étape 155 de saisie d'un identifiant représentatif d'une nature topologique d'un dispositif électronique communicant, la donnée de nature topologique correspondant à cet identifiant saisi est enregistrée.

Par « automatique », on entend ici une réalisation visant à fournir le même résultat que l'étape de saisie 155 mais sans intervention humaine. Par exemple, les coordonnées GPS d'un dispositif électronique communicant peuvent être enregistrées par la mise en œuvre d'un module GPS directement positionné dans le dispositif ou via un appareil (en général un téléphone mobile) qui a permis d'effectuer l'installation du dispositif communicant, étant entendu que cet appareil doit être à proximité lors de l'installation.

Alternativement, la réalisation automatique de l'étape 105 d'enregistrement met en œuvre une étape 150 de mesure. La nature de cette étape 150 de mesure dépend de la nature du dispositif électronique communicant. Par exemple, cette étape 150 de mesure est réalisée par l'utilisation d'un module de positionnement GPS. Dans d'autres exemples, si le dispositif électronique communicant est une prise connectée, une empreinte de consommation électronique d'un appareil branché à ladite prise connectée peut être comparée à un ensemble d'empreintes de consommation préenregistrées et associées à un type d'appareil. Ceci permet, automatiquement, de déterminer quel appareil est connecté à une prise connectée. Dans d'autres exemples, le dispositif électronique communicant exécute une mesure d'indication de l'intensité puissance du signal reçu (abrévié par « RSSI », en anglais). Cette mesure permet d'estimer la distance entre le dispositif électronique communicant et un autre point du réseau en communication avec ledit dispositif. Ceci permet de réaliser une cartographie topologique du réseau en place dans le domicile.

L'étape 150 de mesure peut mesurer une distance radio ou logique entre un dispositif électronique communicant et un périphérique communicant, la donnée de nature topologique mémorisée correspondant à cette distance mesurée.

Par « semi-automatique », on entend ici toute combinaison d'une présélection automatique d'un ensemble de propositions parmi un ensemble plus large d'éléments et une saisie par l'opérateur d'une des propositions présélectionnées.

Ces données topologiques agissent comme un descripteur pour un mécanisme d'apprentissage automatique. De telles données permettent de différencier deux exemplaires d'un même dispositif utilisés dans deux contextes différents. Par exemple, l'utilisation d'une prise connectée dans une chambre est significativement distincte de l'utilisation d'une prise connectée dans un cellier.

L'étape d'émission 110 est réalisée par la mise en œuvre de tout moyen de communication habituellement utilisé dans le contexte des objets connectés (« loT » en anglais, pour « Internet of Things », traduit par internet des objets). Par exemple, l'étape d'émission 110 peut être réalisée en mettant en œuvre le standard Wi-Fi (marque déposé) ou la norme Bluetooth (marque déposé). Alternativement, l'étape d'émission 110 peut être réalisée via une liaison de données filaire reliant le dispositif électronique communicant à un collecteur de données mis en œuvre au cours de l'étape 115 de collecte.

L'étape d'émission 110 peut être réalisée ponctuellement, périodiquement ou sur commande d'un contrôleur. L'étape d'émission 110 peut mettre en œuvre des intermédiaires d'émission, de type relais ou collecteurs intermédiaires. Par exemple, dans certaines configurations, plusieurs dispositifs communicants communiquent avec un point d'accès à un réseau internet, ledit point d'accès stockant, dans une mémoire tampon, un lot (« batch », en anglais) de données envoyées à un horaire quotidien déterminé. La stratégie de gestion du réseau informatique est sans importance au regard de la présente invention pour peu que la donnée soit collectée.

La donnée émise peut correspondre à une valeur intrinsèque du dispositif électronique communicant : une valeur d'horloge d'un circuit électronique de commande dudit dispositif.

La donnée émise peut correspondre à une valeur environnant le dispositif électronique : une valeur de taux de dioxyde de carbone dans l'atmosphère si le dispositif électronique communicant comporte un capteur d'un tel taux, par exemple.

La donnée émise peut correspondre à un état du dispositif, par exemple allumé ou éteint.

L'étape de collecte 115 est réalisée par la mise en œuvre d'une mémoire informatique de stockage des données remontées par chaque dispositif électronique communicant. Cette mémoire informatique peut correspondre à la même mémoire stockant les données topologiques.

L'étape de génération 120 est réalisée par la mise en œuvre d'un algorithme d'apprentissage automatique, supervisé ou non, appliqué à tout ou partie des données collectées. Par exemple, des algorithmes de classification par apprentissage supervisé peuvent être mis en œuvre. Ces algorithmes créent des blocs de données d'une longueur choisie et essaient de trouver des répliques dans les données mesurées. Ces algorithmes ne sont qu'une évaluation statistique de la dispersion des données dans un espace défini.

Alternativement, des algorithmes de modélisation statistiques, telles le modèle de Markov caché, les champs aléatoires conditionnels et les champs aléatoires de Markov peuvent être employés. Alternativement, des algorithmes hybrides, mettant en œuvre un apprentissage automatique complété par un système expert, peuvent être utilisés. Ces méthodes sont capables d'ajouter la notion de dépendance entre les différents évènements d'une activité donnée. Cela permet d'identifier des relations spatio-temporelles entre les données, ce qui n'est pas le cas des techniques précédentes.

L'étape de génération 120 peut mettre en œuvre un système d'apprentissage neuronal, par exemple. Un tel système d'apprentissage automatique peut être de type LSTM (pour « Long Short Term Memory », traduit par « Mémoire à long court terme »).

Dans chacun de ces systèmes, un ensemble de données descriptrices d'apprentissage est fourni à un modèle d'apprentissage et un ensemble de données est déterminé comme étant un résultat à atteindre. Le modèle, ensuite, pondère les valeurs d'entrées pour obtenir les résultats, de sorte à obtenir un modèle universel applicable à des données ultérieurement fournies en entrée.

Dans un modèle à réseau neuronal, une, deux ou trois couches de neurones cachés peuvent être mis en œuvre. Une fonction d'activation de type rampe, marche, logistique ou unité de rectification linéaire peut être mise en œuvre.

Parmi les données descriptrices, on note par exemple :
- un indicateur de topologie associé à un dispositif, tel :
   - un positionnement géographique absolu, telles des coordonnées GPS,
   - un positionnement géographique relatif, représentatif d'un identifiant ou d'un nom de pièce dans un habitat, par exemple et/ou
   - un positionnement dans un réseau informatique, tel :
      - un nombre de périphériques intermédiaires liant le dispositif à un point d'accès (par exemple, une « set-top box » pour boitier décodeur), tels un pont (« bridge », en anglais), un dispositif relais ou autre,
      - un nombre périphériques intermédiaires liant le dispositif à un autre dispositif sur le même réseau informatique, correspondant en principe au réseau informatique du domicile ou associé à un immeuble,
      - un identifiant de nature d'usage dudit dispositif correspondant, par exemple, à un relais, à un actionneur, à un capteur, à un émetteur de signaux électromagnétiques ou acoustiques,
      - un nombre de dispositifs connectés, sur un plan informationnel ou énergétique, au dit dispositif ou
      - un identifiant de nature de dispositifs connectés, sur un plan informationnel ou énergétique, au dit dispositif, par exemple « machine à laver » ou « téléviseur »,
- un indicateur représentatif d'un paramètre physique du dispositif, tel :
   - une consommation énergétique instantanée,
   - une consommation énergétique cumulée, périodique ou depuis un instant déterminé,
   - une consommation énergétique ponctuelle, associée à une valeur d'horloge correspondante,
   - une durée d'allumage du dispositif depuis la dernière mise en veille ou extinction,
   - une durée d'allumage totale du dispositif,
   - une date d'installation du dispositif,
   - un numéro de série du dispositif,
   - une quantité d'énergie fournie par le dispositif à un dispositif tiers, relié au dit dispositif,
   - une tension aux bornes du dispositif,
   - une intensité électrique traversant le dispositif et/ou
   - une valeur d'horloge.

L'étape de génération 120 est réalisée par la mise en œuvre d'un dispositif électronique de calcul, de type microprocesseur embarqué dans un serveur informatique. La nature exacte de l'étape de génération 120 dépend du résultat pour lequel un modèle d'inférence doit être généré. Ci-dessous, voici trois exemples de modèles pouvant être générés.

Retour de l'école : il est possible d'inférer l'heure de retour habituelle des personnes du foyer, en se basant sur l'allumage d'ampoule (mesurée par un dispositif électronique communicant), et/ou de l'ouverture de porte (mesurée par un dispositif électronique communicant). Il est aussi possible d'inférer l'activité de l'utilisateur en se basant sur la nature des appareils mobiles détectés (ou leur absence). Une anomalie, telle que l'absence d'un retour intervenant habituellement dans une plage horaire, peut être signalée à l'utilisateur via l'émission d'une alerte.

Maison fermée : il est possible d'inférer aussi qu'une maison est fermée pour cause d'absence prolongée, là aussi en se basant sur l'absence d'allumage (mesuré par un dispositif électronique communicant) et/ou de détection de mouvement (mesuré par un dispositif électronique communicant). Un mouvement détecté lorsqu'une absence prolongée est détectée doit lui aussi être signalé à l'utilisateur puisque ce mouvement peut être représentatif d'une effraction.

Personne âgée : là aussi les routines du quotidien, l'ouverture du réfrigérateur (mesurée par un dispositif électronique communicant), l'allumage de la cuisinière (mesuré par un dispositif électronique communicant) peuvent être détectés et leur absence permet de signaler un possible incident.

Les états ainsi inférés, dits « résultats », peuvent être :
- la présence ou non de personnes à l'intérieur d'un immeuble,
- l'absence involontaire d'extinction ou de mise en veille d'un dispositif et/ou
- un état anormal de fonctionnement d'un dispositif.

Ces états inférés peuvent conduire à une étape non représentée régularisation de cet état, via une étape d'actionnement d'un dispositif pour produire, par exemple :
- une activation du dispositif,
- la réalisation d'un processus par ce dispositif,
- la transmission d'une donnée par ce dispositif et/ou
- la mise en veille du dispositif.

Dans une version minimale, l'étape de génération 120 permet de générer un modèle de prédiction de résultat à partir d'une valeur collectée unique. Par exemple, si la porte du domicile est ouverte pendant une durée supérieure à une valeur limite apprise en fonction des durées d'ouvertures constatées, le résultat « ouverture anormale de la porte » peut être prédit.

Dans des modes de réalisation préférentiels, l'étape de génération 120 d'un processus de prédiction met en œuvre au moins un élément parmi :
- une dérivée de la courbe d'une séquence de valeurs en un point déterminé,
- un minimum d'au moins une séquence de valeurs captée,
- un maximum d'au moins une séquence de valeurs captée,
- une différence entre les deux derniers points d'au moins une séquence de valeurs captée,
- un nombre de changement de signe de la dérivée d'une courbe approximative de la séquence de valeurs pendant un intervalle déterminé,
- un ratio entre une valeur initiale et une valeur finale dans un intervalle d'au moins une séquence de valeurs captée,
- une information temporelle du dernier changement de valeur,
- la durée depuis le dernier changement de signe de la dérivée de la courbe d'une séquence de valeurs pendant un intervalle déterminé,
- une valeur médiane, de variance ou d'écart type de valeur captée dans au moins une séquence de valeurs captée où
- une valeur de distribution des quantiles dans au moins une séquence de valeurs captée.

L'étape 125 d'exécution du processus permet de tirer bénéfice du processus généré dans sa qualité prédictive. L'exécution du processus s'entend ici au sens de la mesure des valeurs émises par un dispositif électronique communicant et l'association à au moins une valeur émise d'un résultat probable (inférence de résultat). Une telle inférence est associée à un indicateur de confiance dans la prédiction du résultat.

Dans des modes de réalisation, l'étape 125 d'exécution est réalisée par un dispositif électronique communicant embarquant un programme informatique représentatif du processus généré.

Le résultat peut être traité de plusieurs manières. Ainsi, l'étape 130 de traitement peut avoir plusieurs formes.

Par exemple, l'étape 130 de traitement comporte une étape 135 d'émission d'un signal d'alerte. Cette étape 135 d'émission est réalisée par n'importe quel moyen d'émission analogique ou numérique. Par exemple, cette étape 135 d'émission est réalisée par la mise en œuvre d'un haut-parleur d'un dispositif électronique communicant. Alternativement, cette étape 135 d'émission est réalisée par la mise en œuvre d'une alerte sur une interface d'un téléphone intelligent. Le mode de réalisation exact de l'étape 135 d'émission dépend du cas d'espèce et peut être préconfiguré ou configurable par un opérateur.

Dans une autre mode de réalisation, l'étape 130 de traitement comporte une étape 140 d'actionnement d'au moins un dispositif électronique communiquant en fonction du résultat prédit.

Dans cet autre mode de réalisation, l'étape 140 d'actionnement est réalisée, par exemple, par la mise en œuvre d'un circuit électronique de commande de chaque dit dispositif électronique communicant. Ce circuit électronique de commande est, par exemple, un système central de gestion domotique (local ou dans le nuage) configuré pour exécuter les processus prédictifs et pour émettre des commandes logiques vers les dispositifs électroniques communicants lorsque le résultat le requiert.

Dans des modes de réalisation, le procédé 100 objet de la présente invention comporte une étape 145 de génération, par un serveur de modélisation et par apprentissage automatique, d'au moins une règle d'actionnement d'au moins un dispositif électronique communicant en fonction d'au moins une valeur descriptive.

Cette étape 145 de génération associe un résultat à une règle d'actionnement de dispositif. Par exemple, si le résultat prédit est « les habitants du domicile sont absents » et qu'une option de simulation de présence dans le domicile est active, l'étape 145 de génération associe à des résultats habituels l'activation de tel ou tel dispositif de sorte que des règles d'actionnement correspondent aux résultats prédits. Par exemple, si passé une heure donnée de la journée, les habitants du domicile allument habituellement une ampoule connectée du salon, en leur absence cette ampoule peut être allumée automatiquement via les règles générées.

Comme on le comprend à la lecture de la présente description, le procédé 100 objet de la présente invention permet de :
- simuler la présence d'occupants,
- recommander des gestes vertueux à l'utilisateur et/ou
- ajouter des notifications liées à la sécurité de la maison ou de ses occupants.

Un tel procédé 100 peut être renforcé par l'ajout d'interaction avec un utilisateur soit au travers d'une interface utilisateur classique, soit avec un assistant vocal.

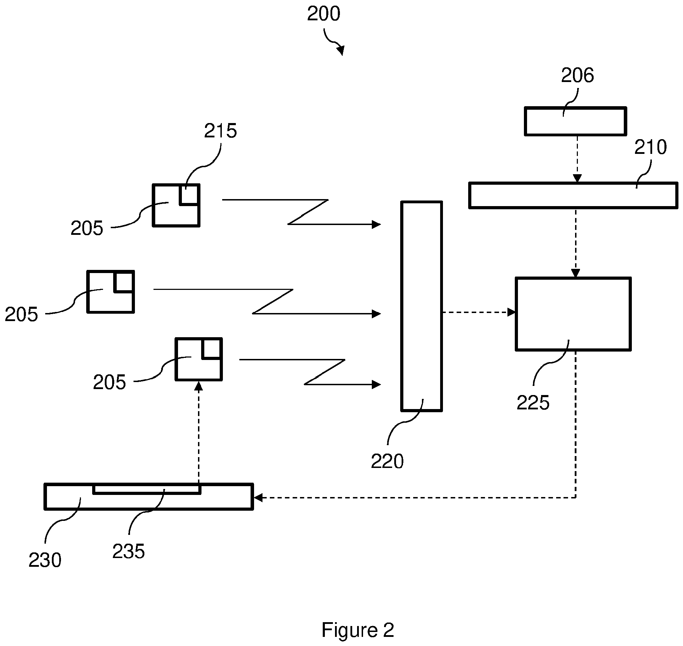

On observe, sur la figure 2, schématiquement, un mode de réalisation particulier du système 200 objet de la présente invention. Ce système 200 d'émission prédictive et automatique d'un signal domotique, comporte :
- au moins un dispositif 205 électronique communicant,
- un moyen de saisie 206 d'un identifiant représentatif d'une nature topologique d'un dispositif électronique communicant, tel un périphérique (de type souris, clavier ou écran tactile) associé à un circuit électronique de calcul présentant, sur un affichage, une interface graphique,
- une première mémoire 210 informatique configurée pour enregistrer la donnée représentative d'une nature topologique saisie, dite « donnée topologique » d'au moins un dispositif électronique communicant,
- un moyen d'émission 215, par au moins un dispositif électronique communicant, d'une donnée représentative d'une valeur de paramètre physique,
- un moyen 220 de collecte d'au moins une dite donnée dans une deuxième mémoire informatique,
- un serveur 225 de modélisation, par apprentissage automatique, d'un processus de prédiction associant au moins une valeur collectée et au moins une donnée topologique, dites « données descriptrices », à au moins une autre valeur collectée, dite « résultat »,
- un serveur 230 de supervision exécutant le processus de prédiction de résultats appliqué à au moins une donnée émise par au moins un dispositif électronique communicant associé à une donnée topologique en mémoire,
- un moyen 235 de traitement du résultat prédit.

Des modes particuliers de réalisation des différents moyens du système 200 sont décrits en regard de la figure 1.

On note que chaque dispositif 205 électronique communicant peut être de type :
- détecteur d'ouverture/fermeture de porte,
- détecteur de mouvement,
- prise télécommandée avec mesure de la consommation,
- ampoule connectée,
- un capteur de température, d'humidité,
- un détecteur de niveau de CO2 dans l'air,
- un capteur de luminosité.

De plus, une plateforme de stockage de données du domicile peut être mise en œuvre, pour stocker les valeurs collectées et les données topologiques. Une telle plateforme stocke, par exemple :
- des identifiants pour l'ensemble des dispositifs électroniques communicants de la maison,
- l'état courant de chaque dispositif électronique communicant et/ou
- pour les capteurs, l'historique horodaté sur plusieurs mois des changements d'état.

Cette plateforme de stockage, peut, de plus :
- remonter des données des actuateurs, notamment de prises et d'ampoules connectées avec constitution d'un historique,
- stocker de l'ensemble de ces données dans un lac de données (« data lake », en anglais)
- mettre en place des déclencheurs sur la remontée des données,
- exécuter un mécanisme de traitement en tâche de fond pour exploiter ces données et/ou
- permettre à l'utilisateur de préciser la topologie des appareils.

## Revendications

1. Procédé (100) d'émission prédictive et automatique d'un signal domotique, **caractérisé en ce qu'**il comporte :
- une étape (155) de saisie d'un identifiant représentatif d'une nature topologique d'un dispositif électronique communicant,
- une étape (105) d'enregistrement, dans une mémoire informatique, de la donnée représentative d'une nature topologique saisie, dite « donnée topologique » d'au moins un dispositif électronique communicant,
- une étape (110) d'émission, par au moins un dispositif électronique communicant, d'une donnée représentative d'une valeur de paramètre physique,
- une étape (115) de collecte d'au moins une dite donnée dans une mémoire informatique,
- une étape (120) de génération, par un serveur de modélisation et par apprentissage automatique, d'un processus de prédiction associant au moins une valeur collectée et au moins une donnée topologique, dites « données descriptrices », à au moins une autre valeur collectée, dite « résultat »,
- une étape (125) d'exécution, par un serveur de supervision, du processus de prédiction de résultats appliqué à au moins une donnée émise par au moins un dispositif électronique communicant associé à une donnée topologique en mémoire,
- une étape (130) de traitement du résultat prédit.

2. Procédé (100) selon la revendication 1, dans lequel l'étape (120) de génération met en œuvre au moins une séquence de valeurs collectées associées à au moins un résultat.

3. Procédé (100) selon l'une des revendications 1 ou 2, dans lequel l'étape (130) de traitement comporte une étape (135) d'émission d'un signal d'alerte.

4. Procédé (100) selon l'une des revendications 1 à 3, dans lequel l'étape (130) de traitement comporte une étape (140) d'actionnement d'au moins un dispositif électronique communiquant en fonction du résultat prédit.

5. Procédé (100) selon la revendication 4, qui comporte une étape (145) de génération, par un serveur de modélisation et par apprentissage automatique, d'au moins une règle d'actionnement d'au moins un dispositif électronique communicant en fonction d'au moins une valeur descriptive.

6. Procédé (100) selon l'une des revendications 1 à 5, dans lequel l'étape (125) d'exécution est réalisée par un dispositif électronique communicant embarquant un programme informatique représentatif du processus généré.

7. Procédé (100) selon l'une des revendications 1 à 6, qui comporte une étape (150) de mesure d'une distance radio ou logique entre un dispositif électronique communicant et un périphérique communicant, la donnée de nature topologique mémorisée correspondant à cette distance mesurée.

8. Système (200) d'émission prédictive et automatique d'un signal domotique, **caractérisé en ce qu'**il comporte :
- au moins un dispositif (205) électronique communicant,
- un moyen de saisie (206) d'un identifiant représentatif d'une nature topologique d'un dispositif électronique communicant,
- une première mémoire (210) informatique configurée pour enregistrer la donnée représentative d'une nature topologique saisie, dite « donnée topologique » d'au moins un dispositif électronique communicant,
- un moyen d'émission (215), par au moins un dispositif électronique communicant, d'une donnée représentative d'une valeur de paramètre physique,
- un moyen (220) de collecte d'au moins une dite donnée dans une deuxième mémoire informatique,
- un serveur (225) de modélisation, par apprentissage automatique, d'un processus de prédiction associant au moins une valeur collectée et au moins une donnée topologique, dites « données descriptrices », à au moins une autre valeur collectée, dite « résultat »,
- un serveur (230) de supervision exécutant le processus de prédiction de résultats appliqué à au moins une donnée émise par au moins un dispositif électronique communicant associé à une donnée topologique en mémoire,
- un moyen (235) de traitement du résultat prédit.
